# FASCICULE DE BREVET EUROPEEN

(11) **EP 0 549 473 B1**
(45) Date de publication et mention de la délivrance du brevet: **11.09.1996**
(21) Numéro de dépôt: 92403545.4
(22) Date de dépôt: 23.12.1992
(51) Int. Cl.: B60H 1/00, F16C 3/28

(54) **Bielle de liaison pour la commande du déplacement d'un organe en particulier d'un volet pivotant**
Verbindungstange für die Steuerung eines beweglichen Elementes, insbesondere für eine Schwenkklappe
Connecting rod to control a displacement mechanism, in particular for a pivoting damper

(30) Priorité: 24.12.1991 FR 9116122
(43) Date de publication de la demande: 30.06.1993
(73) Titulaire: Valeo Climatisation, 78321 La Verrière (FR)
(72) Inventeur: Loup, Didier, F-78310 Maurepas (FR)
(74) Mandataire: Gamonal, Didier

(56) Documents cités:
- DE-U- 8 807 405
- FR-A- 628 169
- FR-A- 2 454 654
- PATENT ABSTRACTS OF JAPAN vol. 11, no. 278 (M-623)(2725) 9 Septembre 1987 & JP-A-62 077 215 ( MATSUSHITA ELECTRIC IND CO LTD ) 9 Avril 1987

## Description

L'invention concerne une bielle de liaison pour la commande du déplacement d'un organe, en particulier d'un volet pivotant dans une installation de chauffage-ventilation et/ou de climatisation d'un véhicule automobile.

Dans les installations de ce type, il est connu d'utiliser au moins un volet propre à pivoter, suivant un angle de débattement limité, entre deux positions extrêmes, généralement définies par des butées.

Le pivotement du volet est habituellement effectué par des moyens mécaniques interposés entre, d'une part, un organe de commande situé sur la planche du bord du véhicule et, d'autre part, le volet pivotant ou un levier solidaire du volet.

Ces moyens mécaniques sont généralement constitués par une commande à câble ou encore par une commande avec une bielle de liaison (voir FR-A-2 454 654).

L'un des problèmes posés par la fabrication en série des véhicules automobiles est qu'il existe des tolérances de fabrication des pièces et également des tolérances de situation dimensionnelles d'une pièce par rapport à une autre.

Dans le cas où l'on utilise un câble pour la commande d'un volet, ces tolérances peuvent être compensées facilement du fait que le câble possède une certaine élasticité propre et joue le rôle d'amortisseur.

Par contre, lorsqu'on utilise une bielle pour la commande d'un volet, il peut arriver que, lorsque ce volet vient dans une position de fin de course, la bielle subisse une résistance mécanique importante conduisant à sa rupture du fait que l'organe de commande n'indique pas une position de fin de course du volet.

C'est, en conséquence, l'un des buts de l'invention de procurer une bielle de liaison capable d'absorber les tolérances de fabrication et/ou de situation des pièces, notamment dans des installations de chauffage-ventilation et/ou de climatisation des véhicules automobiles.

L'invention propose, à cet effet, une bielle de liaison pour la commande du déplacement d'un organe, en particulier d'un volet pivotant dans une installation de chauffage-ventilation et/ou de climatisation d'un véhicule automobile, du type comprenant un corps allongé possédant deux articulations distantes l'une de l'autre.

Selon une caractéristique essentielle de l'invention le corps comprend deux parties situées dans le prolongement l'une de l'autre, portant respectivement les deux articulations et réunies entre elles par des moyens élastiques de réglage de manière à ce que, lorsque le volet vient en butée, lesdits moyens élastiques de réglage soient propres à modifier la distance séparant les deux articulations en compensant les différences de longueur.

Ainsi, la bielle de liaison permet d'absorber les tolérances de fabrication et/ou de situation d'un organe mobile par rapport à un organe de commande, en particulier d'un volet pivotant par rapport à un organe d'actionnement dans une installation du type défini précédemment.

Dans une première forme de réalisation de l'invention, les moyens élastiques de réglage comprennent un cylindre solidaire de l'une des parties du corps, un piston solidaire de l'autre partie du corps et propre à coulisser axialement dans le cylindre et au moins un ressort interagissant entre le cylindre et le piston entre une position de repos à laquelle correspond une distance au repos entre les deux articulations de la bielle et au moins une position extrême de travail à laquelle correspond une distance différente entre ces deux articulations.

C'est donc ce ou ces ressorts qui permettent de compenser les tolérances de fabrication et/ou de situation et d'absorber une éventuelle résistance mécanique subie par la bielle.

Ces moyens élastiques peuvent comprendre un seul ressort hélicoïdal de compression interposé entre le cylindre et le piston et propre à prendre une position de repos à l'état non comprimé et une position de travail à l'état comprimé, la distance des articulations dans cette position de travail étant plus grande que dans la position de repos.

En variante, les moyens élastiques de réglage comprennent deux ressorts hélicoïdaux antagonistes précomprimés, agissant de part et d'autre du piston et définissant une position de repos dans laquelle la distance des articulations prend une valeur intermédiaire et des positions extrêmes de travail en lesquelles cette distance prend respectivement une valeur minimale et une valeur maximale.

Dans une autre forme de réalisation de l'invention, les moyens élastiques de réglage comprennent deux branches incurvées, déformables élastiquement, réunies ensemble, d'une part, à l'une des parties du corps et, d'autre part, à l'autre des parties du corps.

Ainsi, lorsque la bielle subit une résistance mécanique, les deux branches déformables peuvent se rapprocher ou s'écarter l'une de l'autre, ce qui, respectivement, augmente ou diminue la distance entre les deux articulations de la bielle.

Avantageusement, ces deux branches sont réalisées d'une seule pièce avec les deux parties du corps de la bielle, par exemple par moulage d'une matière plastique.

Selon une autre caractéristique de l'invention, la bielle de liaison comprend en outre des moyens de préréglage pour ajuster au préalable l'écartement des deux branches, suivant une direction transversale à la direction des articulations, et par conséquent l'écartement des deux articulations.

Une telle caractéristique est particulièrement avantageuse car elle permet à une même bielle d'être utilisée dans des applications différentes.

Dans une première variante, ces moyens de préréglage comportent une vis s'étendant dans la direction transversale précitée et possédant une tête retenue dans un logement ménagé dans l'une des branches et une partie filetée coopérant avec un écrou solidaire de l'autre branche.

Dans une autre variante de réalisation, les moyens de préréglage comprennent une tige s'étendant dans la direction transversale précitée, ayant une extrémité solidaire de l'une des branches et une autre extrémité à relief cranté et propre à coopérer avec un logement de forme correspondante ménagée dans l'autre branche.

Les deux branches de la bielle peuvent prendre ainsi une multiplicité de positions différentes pour conférer une multiplicité d'écartements différents des deux articulations.

Dans la description qui suit, faite seulement à titre d'exemple, on se réfère aux dessins annexés, sur lesquels :
- la figure 1 est une vue latérale d'une installation comprenant un volet actionné par une bielle de liaison selon une première forme de réalisation de l'invention ;
- la figure 2 est une vue en élévation correspondant à la figure 1 ;
- la figure 3 représente l'installation de la figure 1, pour une autre position du volet ;
- la figure 4 est une vue en élévation correspondant à la figure 3 ;
- les figures 5, 6 et 7 montrent des moyens de réglage à ressorts dans une autre variante de réalisation, respectivement en position au repos et dans deux positions extrêmes de travail ;
- la figure 8 est une vue en élévation d'une bielle de liaison dans une autre forme de réalisation de l'invention ;
- la figure 9 est une vue latérale correspondant à la figure 8 ;
- la figure 10 représente un écrou articulé propre à faire partie de la bielle des figures 8 et 9, cet écrou étant représenté dans une position inactive ;
- la figure 11 est une vue correspondant à celle de la figure 10 représentant l'écrou en position active ;
- la figure 12 représente, à échelle agrandie, l'une des articulations de la bielle des figures 8 et 9 ;
- la figure 13 est une vue latérale partielle d'une bielle de liaison dans une autre variante de réalisation ; et
- la figure 14 est un détail de la bielle de la figure 13.

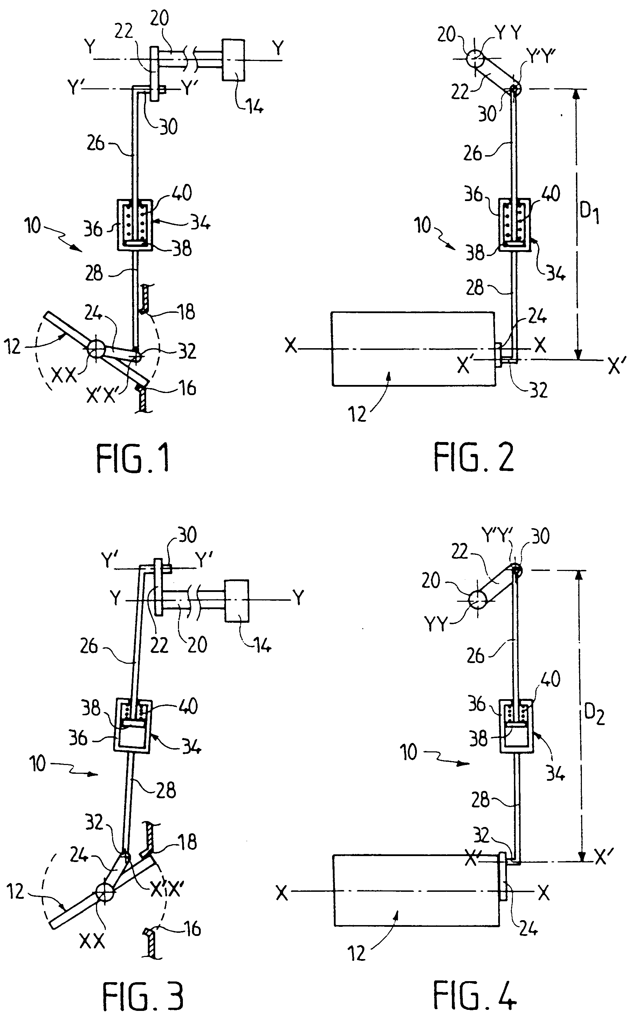

On se réfère tout d'abord aux figures 1 à 4 qui représentent une bielle de liaison 10 propre à commander le déplacement d'un volet pivotant 12 au moyen d'un organe d'actionnement 14.

Le volet 12 est monté pivotant autour d'un axe de rotation X-X, suivant un angle de débattement limité, entre une première position extrême où il coopère avec une première butée 16 (figures 1 et 2) et une seconde position extrême où il coopère avec une seconde butée 18 (figures 3 et 4).

Le volet 12 peut faire partie par exemple d'une installation de chauffage-ventilation et/ou de climatisation d'un véhicule automobile.

En ce cas, l'organe d'actionnement 14 peut être constitué, par exemple, d'un bouton rotatif placé sur la planche de bord du véhicule automobile considéré.

Dans l'exemple, le bouton 14 est solidaire d'un axe 20 monté à rotation autour d'un axe Y-Y, s'étendant orthogonalement par rapport à l'axe X-X, et sur lequel est câlé un levier 22. Le volet 12 est muni d'un levier 24 solidaire en rotation avec lui.

La bielle de liaison 10 est articulée entre les leviers 22 et 24 pour permettre le pivotement du volet 12 entre ses deux positions extrêmes par l'organe d'actionnement 14. La bielle 10 comprend un corps allongé formé de deux parties 26 et 28 disposées dans l'alignement l'une de l'autre. La partie 26 est munie d'une articulation 30 qui coopère avec le levier 22 suivant un axe Y'-Y', parallèle à l'axe Y-Y. Par ailleurs, la partie 28 comprend une articulation 32 qui coopère avec le levier 24 suivant un axe d'articulation X'-X', parallèle à l'axe X-X.

Les parties 26 et 28 sont réunies entre elles par des moyens élastiques de réglage 34 permettant de modifier l'écartement entre les articulations 30 et 32. Dans la forme de réalisation des figures 1 à 4, ces moyens de réglage comprennent un cylindre 36 solidaire de la partie 28 et un piston 38 solidaire de la partie 26 et propre à coulisser dans le cylindre, ainsi qu'un ressort hélicoïdal de compression 40, interposé entre le cylindre et le piston.

Le ressort 40 est destiné à rappeler les articulations 30 et 32 l'une vers l'autre, de telle sorte que la distance D0 séparant ces deux articulations ait une valeur minimale correspondant à la configuration au repos des moyens 34 (figures 1 et 2).

Lorsque le volet 12 coopère avec la butée 16, la bielle 10 est normalement dans sa position au repos correspondant à l'écartement D0 entre les articulations 30 et 32.

Sous l'action de l'organe 14, le levier 22 pivote pour déplacer le volet 12 vers la position des figures 3 et 4, en laquelle il coopère avec la butée 18. Dans cette position, le ressort 40 est comprimé pour compenser la résistance mécanique subit par la bielle lorsque le volet vient contre la butée 18. Il en résulte que la distance D1, qui sépare alors les articulations 30 et 32, est supérieure à la distance D0 définie précédemment.

On évite ainsi tout risque de rupture ou de déformation de la bielle dans la position du volet représenté aux figures 3 et 4 dû au fait essentiellement que l'opérateur continuera d'agir sur l'organe d'actionnement 14 pour l'amener à sa position de fin de course. Ceci permet également d'assurer un contact étroit entre le volet 12 et la butée 18.

Par contre, dans la forme de réalisation des figures 1 à 4, les moyens élastiques 34 ne peuvent jouer aucun rôle dans la position du volet selon les figures 1 et 2.

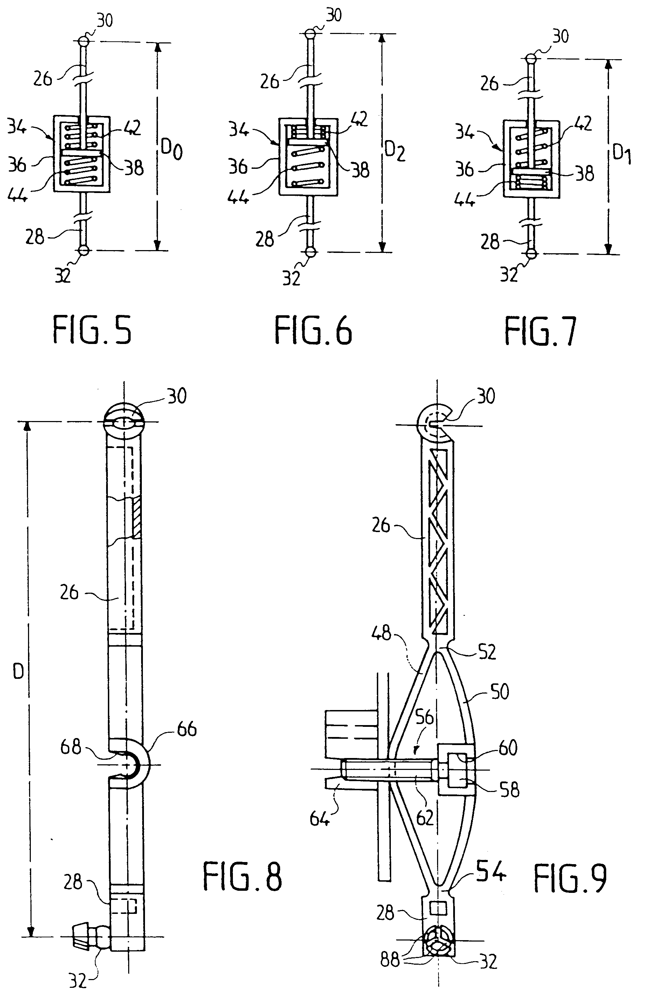

Dans la forme de réalisation des figures 5 à 7, les moyens élastiques 34 comprennent aussi un cylindre 36 solidaire de la partie 28 et un piston 38 solidaire de la partie 26.

A la différence de la forme de réalisation des figures 1 à 4, les moyens 34 comportent deux ressorts hélicoïdaux antagonistes 42 et 44, disposés à l'état précomprimé, et agissant de part et d'autre du piston 38.

Dans la position au repos définie à la figure 5, dans laquelle les efforts des deux ressorts 42 et 44 se compensent, la distance entre les articulations 30 et 32 prend une valeur minimale D0.

Lorsque la bielle 10 subit un effort mécanique tendant à l'allonger, le ressort 42 est comprimé davantage que le ressort 44 et la distance entre les articulations 30 et 32 prend une valeur D1 supérieure à D0.

Par contre, lorsque la bielle 10 subit un effort axial tendant à diminuer sa longueur, le ressort 44 est comprimé davantage que le ressort 42 et la distance entre les articulations 30 et 32 prend une valeur D2 inférieure à D0.

L'utilisation de moyens de réglage, tels que représentés sur les figures 5 à 7, est particulièrement avantageuse puisqu'elle permet d'absorber les efforts mécaniques lorsque le volet 12 des figures 1 à 4 vient en coopération aussi bien avec la butée 16 qu'avec la butée 18.

Dans la forme de réalisation des figures 8 à 12, auxquelles on se réfère maintenant, les deux parties 26 et 28 de la bielle de liaison sont reliées entre elles par des moyens élastiques de réglage 46 comprenant deux branches incurvées 48 et 50 et déformables élastiquement. Ces deux branches sont réunies ensemble, d'une part, en 52 à la partie 26 et, d'autre part, en 54 à la partie 28. Les deux branches 48 et 50 s'étendent dans la direction générale de la bielle de liaison. Les parties 26 et 28 et les deux branches 48 et 50 sont avantageusement réalisées d'une seule pièce, par exemple par moulage d'une matière plastique.

Dans l'exemple de réalisation représentée, la bielle de liaison comprend aussi une articulation 30 réalisée sous la forme d'un évidement définissant un axe Y'-Y' et une articulation 32 réalisée sous la forme d'un pivot définissant un axe d'articulation X'-X' s'étendant orthogonalement à l'axe Y'-Y'.

Les branches 48 et 50, étant déformables élastiquement, permettent de modifier la distance D séparant les articulations 30 et 32.

Comme montré à la figure 9, les moyens 46 comprennent des moyens de préréglage permettant d'ajuster au préalable l'écartement des deux branches 48 et 50 dans une direction transversale à la direction des articulations, c'est-à-dire la direction générale de la bielle.

Dans la forme de réalisation des figures 8 à 12, ces moyens de préréglage comportent une vis 56 possédant une tête 58 retenue dans un logement 60 ménagé dans la branche 50 et une partie filetée 62 coopérant avec un écrou 64 solidaire de la branche 48.

Le logement 60 est défini par un boîtier de retenue 66 possédant une ouverture latérale 68 pour l'introduction de la tête 58.

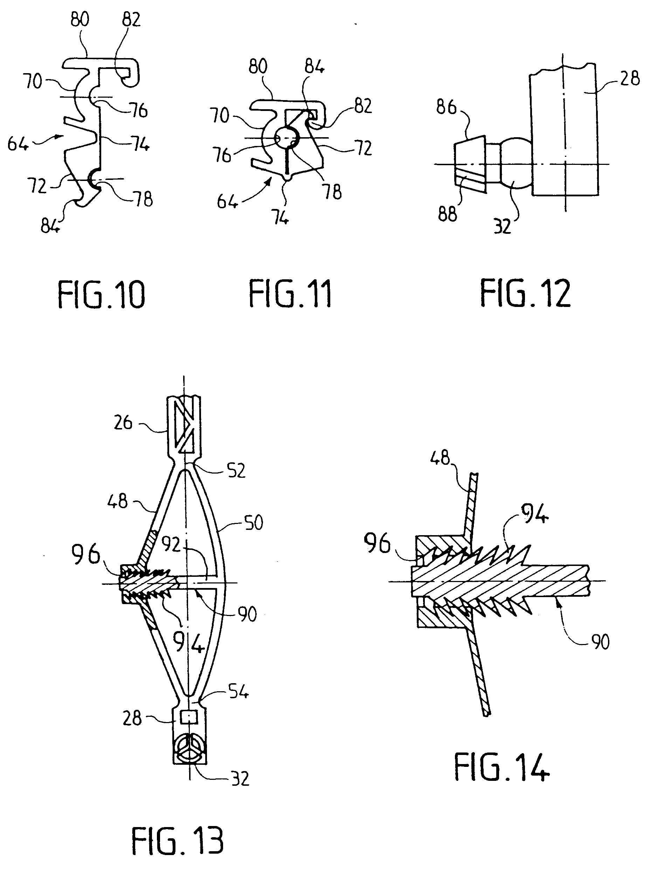

Dans la forme de réalisation, l'écrou 64 est formé de deux parties 70 et 72, articulées autour d'une charnière 74 (figures 10 et 14). Dans l'exemple, l'écrou 64 est réalisé d'une seule pièce par moulage d'une matière plastique déformable, la charnière 74 étant formée d'un pont de matière susceptible d'être plié pour assurer la fermeture de l'écrou. Les parties 70 et 72 ménagent respectivement deux demi-logements filetés 76 et 78. De la partie 70, dépend une âme 80 qui se prolonge par un bec retourné 82. En outre, la partie 72 comporte un bec d'extrémité 84 susceptible de coopérer avec le bec 82.

Dans la position représentée sur la figure 10, les deux parties 70 et 72 sont dans une position éloignée l'une de l'autre, autorisant ainsi la mise en place de la partie filetée 62 de la vis 56 (figure 9) en toute position axiale voulue le long de l'écrou pour procurer un réglage grossier. Il suffit ensuite de faire basculer la partie 72 pour la rapprocher de la partie 70 en déformant la charnière 74, jusqu'à ce que le bec 84 s'engage sous le bec 82 comme montré à la figure 11. Dans cette position, les deux demi-logements filetés 76 et 78 coopèrent étroitement avec la partie filetée 62 de la vis 56 et il suffit alors de tourner la tête 58 de la vis pour obtenir un réglage fin de l'écartement des deux branches 48 et 50 de la bielle.

La figure 12 montre que l'articulation 32 de la partie 28 est munie d'une tête 86 de forme générale tronconique qui est pourvue de trois fentes 88 en étoile (figure 9). Ainsi, la tête 86 peut être comprimée radialement pour être introduite dans un logement approprié, par exemple ménagé dans un levier d'un volet, pour se dilater ensuite radialement et empêcher le déboîtement de la tête 86.

Dans la forme de réalisation des figures 13 et 14, auxquelles on se réfère maintenant, les moyens de préréglage des branches 48 et 50 comprennent une tige 90 s'étendant dans la direction transversale de la bielle. La tige 90 a une extrémité 92 solidaire de la branche 50 et une extrémité opposée 94 comportant un relief cranté propre à coopérer avec un logement 96 de forme correspondante, ménagé dans l'autre branche 48. Il suffit alors de déplacer axialement la tige 90 par rapport à la branche 48 pour faire coopérer le crantage 94 avec le logement 96 en position voulue.

Bien que l'invention ait été décrite en référence particulière à une bielle de liaison utilisée pour la commande d'un volet pivotant, elle trouve d'autres applications.

## Revendications

1. Bielle de liaison pour la commande du déplacement d'un organe, en particulier d'un volet pivotant dans une installation de chauffage-ventilation et/ou de climatisation d'un véhicule automobile, du type comprenant un corps allongé (26,28) possédant deux articulations (30,32) distantes l'une de l'autre, le corps comprenant deux parties (26,28) situées dans le prolongement l'une de l'autre, portant respectivement les deux articulations (30,23) et réunies entre elles par des moyens élastiques de réglage (34;48,50) caractérisée en ce que, lorsque le volet vient en butée, lesdits moyens élastiques de réglage soient propres à modifier la distance (D) séparant les deux articulations en compensant les différences de longueur.

2. Bielle de liaison selon la revendication 1, caractérisée en ce que les moyens élastiques de réglage (34) comprennent un cylindre (36) solidaire de l'une (28) des parties du corps, un piston (38) solidaire de l'autre partie (26) du corps et propre à coulisser axialement dans le cylindre et au moins un ressort (40;42;44) interagissant entre le cylindre et le piston entre une position de repos à laquelle correspond une distance de repos entre les articulations (30,32) et au moins une position de travail à laquelle correspond une distance différente entre les articulations.

3. Bielle de liaison selon la revendication 2, caractérisée en ce que les moyens élastiques de réglage (34) comprennent un ressort hélicoïdal (42) interposé entre le cylindre (36) et le piston (38) et propre à prendre une position de repos à l'état non comprimé et une position de travail à l'état comprimé, la distance des articulations dans la position de travail étant plus grande que dans la position de repos.

4. Bielle de liaison selon la revendication 2, caractérisée en ce que les moyens élastiques de réglage (34) comprennent deux ressorts hélicoïdaux antagonistes (42,44) précomprimés, agissant de part et d'autre du piston (38) et définissant une position de repos dans laquelle la distance entre les articulations (30,32) prend une valeur intermédiaire et deux positions extrêmes de travail en lesquelles cette distance prend respectivement une valeur minimale et une valeur maximale.

5. Bielle de liaison selon la revendication 1, caractérisée en ce que les moyens élastiques de réglage comprennent deux branches incurvées (48,50) déformables élastiquement, réunies ensemble, d'une part, à l'une (26) des parties du corps et, d'autre part, à l'autre (28) des parties du corps.

6. Bielle de liaison selon la revendication 5, caractérisée en ce que les deux branches (48,50) sont réalisées d'une seule pièce avec les deux parties du corps (26,28), par exemple par moulage d'une matière plastique.

7. Bielle de liaison selon l'une des revendications 5 et 6, caractérisée en ce qu'elle comprend en outre des moyens de préréglage (56;90) pour ajuster au préalable l'écartement des branches (48 et 50), dans une direction transversale à la direction des articulations (30,32) et, par conséquent, l'écartement entre ces deux articulations.

8. Bielle de liaison selon la revendication 7, caractérisée en ce que les moyens de préréglage comportent une vis (56) s'étendant dans cette direction transversale et possédant une tête (58) retenue dans un logement (60) ménagé dans l'une (50) des branches et une partie filetée (62) coopérant avec un écrou (64) solidaire de l'autre branche (48).

9. Bielle de liaison selon la revendication 8, caractérisée en ce que l'écrou (64) est formé de deux parties articulées (70,72) dont chacune ménage un demi-logement fileté (76,78), ces deux parties articulées pouvant être déplacées entre une position éloignée autorisant un réglage grossier de la partie filetée (62) de la vis (56) dans l'un des deux demi-logements et une position rapprochée en laquelle les deux demi-logements (76,78) entourent étroitement la partie filetée (62) de la vis, autorisant ainsi un réglage fin de cette partie filetée par rotation.

10. Bielle de liaison selon la revendication 8, caractérisée en ce que les moyens de préréglage comprennent une tige (90) s'étendant dans cette direction transversale, ayant une extrémité (92) solidaire de l'une (50) des deux branches et une autre extrémité (94) à relief cranté, propre à coopérer avec un logement (92), de forme correspondante, ménagée dans l'autre branche (48).

## Claims

1. A coupling rod for controlling the displacement of a member, in particular a pivoting butterfly valve in a heating and ventilating and/or air conditioning installation for a motor vehicle, of the type comprising an elongate body (26, 28) having two pivots (30, 32) spaced apart from each other, the body comprising two parts (26, 28) which are extensions of each other and carry, respectively, the two pivots (30, 32), and which are coupled together by resilient adjusting means (34; 48, 50), characterised in that, when the butterfly valve closes, the said resilient adjusting means are arranged to modify the distance (D) that separates the two pivots, so as to compensate for the differences in length.

2. A coupling rod according to Claim 1, characterised in that the resilient adjusting means (34) comprise a cylinder (36) fixed to one (28) of the parts of the body, a piston (38) fixed to the other part (26) of the body and arranged to slide axially in the cylinder, and at least one spring (40; 42; 44) interacting between the cylinder and the piston between a rest position, to which there corresponds a rest distance between the pivots (30, 32), and at least one working position to which there corresponds a different distance between the pivots.

3. A coupling rod according to Claim 2, characterised in that the resilient adjusting means (34) comprise a helical spring (42) interposed between the cylinder (36) and the piston (38), and adapted to assume a rest position in the uncompressed condition and a working position in the compressed condition, the distance between the pivots in the working position being greater than that in the rest position.

4. A coupling rod according to Claim 2, characterised in that the resilient adjusting means (34) comprise two precompressed helical springs (42, 44), working in opposition to each other on either side of the piston (38) and defining a rest position, in which the distance between the pivots (30, 32) assumes an intermediate value, and two extreme working positions, in which the said distance assumes a minimum value and a maximum value respectively.

5. A coupling rod according to Claim 1, characterised in that the resilient adjusting means comprise two resiliently deformable curved branches (48, 50), which are coupled together, firstly to one (26) of the parts of the body and secondly to the other (28) part of the body.

6. A coupling rod according to Claim 5, characterised in that the two branches (48, 50) are made in one piece with the two parts of the body (26, 28), for example by moulding in a plastics material.

7. A coupling rod according to Claim 5 or Claim 6, characterised in that it further includes preadjusting means (56; 90) for adjusting beforehand the spacing of the branches (48 and 50), in a direction transverse to the direction of the pivots (30, 32), and consequently the spacing between the said two pivots.

8. A coupling rod according to Claim 7, characterised in that the preadjusting means comprise a screw (56) which extends in the said transverse direction and which has a head (58) retained in a recess (60) formed in one (50) of the branches, and a threaded portion (62) cooperating with a nut (64) fixed to the other branch (48).

9. A coupling rod according to Claim 8, characterised in that the nut (64) comprises two articulated parts (70, 72), each of which defines a threaded half aperture (76, 78), the two said articulated parts being displaceable between a far position for permitting coarse adjustment of the threaded portion (62) of the screw (56) in one of the two half apertures, and a near position in which the two half apertures (76, 78) closely surround the threaded portion (62) of the screw, thus permitting fine adjustment of the said threaded portion by rotation.

10. A coupling rod according to Claim 8, characterised in that the preadjusting means comprise a bar portion (90) extending in the said transverse direction and having one end (92) fixed to one (50) of the two branches and another end (94) having a toothed profile, for cooperation with a seating (92) having a corresponding form and defined in the other branch (48).

## Patentansprüche

1. Verbindungsstange für die Steuerung eines beweglichen Elements, insbesondere für eine Schwenkklappe in einer Heizungs- und Lüftungs- und/oder Klimaanlage für Kraftfahrzeuge, in der Ausführung mit einem länglichen Körper (26, 28), der zwei voneinander entfernte Gelenke (30, 32) umfaßt, wobei der Körper aus zwei in Verlängerung zueinander angeordneten Teilen (26, 28) besteht, die jeweils eines der beiden Gelenke (30, 23) tragen und durch elastische Einstellmittel (34; 48, 50) miteinander verbunden sind , **dadurch gekennzeichnet,** daß, wenn die Klappe zum Anschlag kommt, die besagten elastischen Einstellmittel den Abstand zwischen den beiden Gelenken verändern können, wobei die Längenunterschiede ausgeglichen werden.

2. Verbindungsstange nach Anspruch 1 , **dadurch gekennzeichnet,** daß die elastischen Einstellmittel (34) einen fest mit einem (28) der Teile des Körpers verbundenen Zylinder (36), einen fest mit dem anderen Teil (26) des Körpers verbundenen Kolben (38), der sich axial im Zylinder verschieben kann, und wenigstens eine Feder (40; 42; 44) enthalten, die zwischen dem Zylinder und dem Kolben zwischen einer Ruhestellung, der ein Ruheabstand zwischen den Gelenken (30, 32) entspricht, und wenigstens einer Arbeitsendstellung wirksam ist, der ein anderer Abstand zwischen den Gelenken entspricht.

3. Verbindungsstange nach Anspruch 2 , **dadurch gekennzeichnet,** daß die elastischen Einstellmittel (34) eine Schraubendruckfeder (42) enthalten, die zwischen dem Zylinder (36) und dem Kolben (38) eingefügt ist und eine Ruhestellung im nicht zusammengedrückten Zustand und eine Arbeitsstellung im zusammengedrückten Zustand einnehmen kann, wobei der Abstand der Gelenke in der Arbeitsstellung größer als in der Ruhestellung ist.

4. Verbindungsstange nach Anspruch 2 , **dadurch gekennzeichnet,** daß die elastischen Einstellmittel (34) zwei gegenwirkende vorgespannte Schraubenfedern (42, 44) enthalten, die beiderseits des Kolbens (38) wirksam sind und eine Ruhestellung, in welcher der Abstand der Gelenke (30, 32) einen Zwischenwert annimmt, und zwei Arbeitsendstellungen bestimmt, in welchen dieser Abstand einen Minimalwert bzw. einen Maximalwert annimmt.

5. Verbindungsstange nach Anspruch 1 , **dadurch gekennzeichnet,** daß die elastischen Einstellmittel zwei elastisch verformbare gekrümmte Schenkel (48, 50) umfassen, die zusammen einerseits mit einem (26) der Teile des Körpers und andererseits mit dem anderen Teil (28) des Körpers verbunden sind.

6. Verbindungsstange nach Anspruch 5 , **dadurch gekennzeichnet,** daß die beiden Schenkel (48, 50) einstückig mit den beiden Teilen des Körpers (26, 28), beispielsweise durch Formpressen aus Kunststoff, ausgeführt sind.

7. Verbindungsstange nach einem der Ansprüche 5 und 6, **dadurch gekennzeichnet,** daß sie außerdem Voreinstellmittel (56; 90) umfaßt, um die Entfernung der Schenkel (48 und 50) entlang einer quer zur Richtung der Gelenke (30, 32) verlaufenden Richtung und dementsprechend die Entfernung der beiden Gelenke im voraus einzustellen.

8. Verbindungsstange nach Anspruch 7 , **dadurch gekennzeichnet,** daß die Voreinstellmittel eine Schraube (56) umfassen, die sich in dieser Querrichtung erstreckt und einen Kopf (58), der in einer in einen der Schenkel (50) eingearbeiteten Aufnahme (60) gehalten wird, sowie einen Gewindeteil (62) besitzt, der mit einer Mutter (64) zusammenwirkt, die fest mit dem anderen Schenkel (48) verbunden ist.

9. Verbindungsstange nach Anspruch 8 , **dadurch gekennzeichnet,** daß die Mutter (64) aus zwei Gelenkteilen (70, 72) besteht, die jeweils eine Gewindeaufnahmehälfte (76, 78) enthalten, wobei diese beiden Gelenkteile zwischen einer entfernten Position, die eine Grobeinstellung des Gewindeteils (62) der Schraube (56) in einer der beiden Aufnahmehälften ermöglicht, und einer angenäherten Position verstellbar sind, in der die beiden Aufnahmehälften (76, 78) den Gewindeteil (62) der Schraube eng umschließen, so daß eine Feineinstellung dieses Gewindeteils durch Drehung ermöglicht wird.

10. Verbindungsstange nach Anspruch 8 , **dadurch gekennzeichnet,** daß die Voreinstellmittel einen Stift (90) umfassen, der sich in dieser Querrichtung erstreckt und der ein fest mit einem (50) der beiden Schenkel verbundenes Ende (92) und ein anderes Ende (94) mit gezahntem Profil aufweist, das mit einer formschlüssigen Aufnahme (92) zusammenwirken kann, die in den anderen Schenkel (48) eingearbeitet ist.
